Europäisches Patentamt

European Patent Office

Office européen des brevets

(19)

(11) Numéro de publication: **0 177 396**
**A1**

(12) **DEMANDE DE BREVET EUROPEEN**

(21) Numéro de dépôt: **85401810.8**

(22) Date de dépôt: **18.09.85**

(51) Int. Cl.⁴: **B 01 D 29/06**

(30) Priorité: **20.09.84 FR 8414430**

(43) Date de publication de la demande:
**09.04.86 Bulletin 86/15**

(84) Etats contractants désignés:
**DE GB IT NL**

(71) Demandeur: **PRECISION MECANIQUE LABINAL Société Anonyme:**
**5 Avenue Newton B.P. 64**
**F-78391 Bois d'Arcy Cedex(FR)**

(72) Inventeur: **Pages, Jean**
**9, rue Jules Siegfried**
**F-93800 Epinay Sur Seine(FR)**

(74) Mandataire: **Faber, Jean-Paul**
**CABINET FABER 34, rue de Leningrad**
**F-75008 Paris(FR)**

(54) **Perfectionnements aux filtres.**

(57) Perfectionnements aux filtres du type se présentant sous forme de cartouches et comprenant un élément tubulaire central perforé (1) solidaire de deux flasques (2 et 3) et entouré d'un corps filtrant en papier poreux, caractérisés en ce que le corps filtrant en papier poreux comprend un premier papier filtre (6) plié en accordéon et disposé de manière que les arêtes des plis s'étendent parallèlement à l'élément tubulaire central et un second papier filtre (7) plié en accordéon et chevronné.

FIG.1

EP 0 177 396 A1

Croydon Printing Company Ltd

La présente invention concerne des perfectionnements aux filtres et plus particulièrement aux filtres utilisés pour la filtration de l'huile dans les moteurs à explosion.

La présente invention vise des filtres, se présentant sous forme de cartouches et comprenant un élément tubulaire central perforé autour duquel s'étend un corps filtrant en papier poreux l'ensemble étant enserré entre deux flasques.

Dans de tels filtres le papier disposé autour de l'élément tubulaire central peut être plié en accordéon ou également plié en accordéon et chevronné.

On a prévu à partir de tels filtres différents systèmes pour améliorer la qualité de la filtration. Un de ces systèmes prévoit de réaliser le papier en deux épaisseurs imbriquées étroitement et plissées simultanément, l'une des épaisseurs extérieure ayant une porosité plus important que l'autre épaisseur intérieure.

L'un des buts de la présente invention est d'améliorer de tels filtres pour en augmenter les performances et la durée d'utilisation.

Les perfectionnements, selon l'invention, s'appliquent à des filtres du type se présentant sous forme de cartouches et comprenant un élément tubulaire central perforé solidaire de deux flasques et entouré d'un corps filtrant en papier poreux, et sont caractérisés en ce que le corps filtrant en papier poreux comprend un premier papier filtre plié en accordéon et disposé de manière que les arêtes des plis s'étendent parallèlement à l'élément tubulaire central et un second papier filtre plié en accordéon et chevronné.

En effet, on sait que le volume de papier filtre nécessaire dans un filtre doit présenter un diamètre externe correspondant au double du diamètre interne ce qui généralement laisse une dimension interne pour l'élément tubulaire central très largement supérieure aux sections nécessaires pour l'écoulement du fluide. On dispose, par conséquent d'une place suffisante pour placer les deux papiers filtres qui permettent d'obtenir un meilleur seuil de filtration et d'augmenter la durée d'utilisation.

De préférence, le premier papier filtre plié en accordéon est disposé pour épouser l'élément tubulaire central et le second papier filtre plié en accordéon et chevronné est disposé autour du premier papier filtre et prend appui sur les arêtes des plis dudit premier papier filtre.

Le premier et le second papier filtre peuvent être séparés par un élément tubulaire perforé.

Enfin suivant une variante de réalisation le second papier filtre plié en accordéon et chevronné est disposé pour épouser l'élément tubulaire central, le premier papier filtre étant disposé autour dudit second papier filtre.

L'invention va maintenant être décrite avec plus de détails en se référant à des modes de réalisation particuliers donnés à titre d'exemple seulement et représentés aux dessins annexés, dans lesquels :

Figure 1 est une vue en perspective éclatée partiellement en coupe d'un filtre, selon l'invention,

Figure 2 est une vue similaire à la figure 1 d'une variante de réalisation.

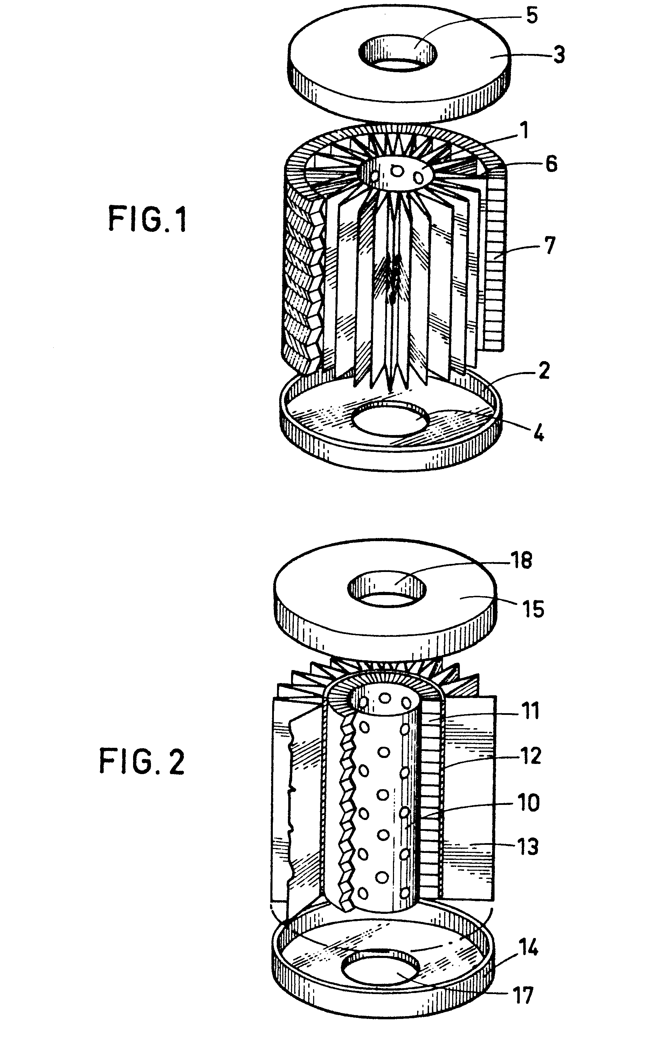

A la figure 1 on a représenté un filtre qui est formé d'un élément tubulaire central perforé 1 et de deux flasques 2 et 3 percés respectivement d'un trou central 4-5, en correspondance avec l'élément tubulaire 1.

Autour de l''élément tubulaire 1 est disposé un premier papier filtre 6 plissé en accordéon, un second papier filtre 7 étant disposé autour dudit premier papier filtre, ce second papier filtre étant, d'une part, plissé en accordéon et, d'autre part, chevronné, c'est-à-dire que chaque bande s'étendant entre deux plis est marqué alternativement sur une face et sur l'autre pour former des chevrons.

Le second papier filtre 7 prend appui sur les arêtes du premier papier filtre 6.

Les différents papier filtre 6 et 7 sont maintenus par les deux flasques et les rebords de ceux-ci, par collage.

A la figure 2, on a représenté une variante de réalisation de l'invention.

Le filtre représenté à cette figure comprend un élément central tubulaire perforé 10 autour duquel est disposé un papier filtre 11 plissé et chevronné, ce papier filtre 11 étant maintenu par un manchon perforé 12 autour duquel s'étend un papier filtre 13 plié en accordéon.

L'ensemble est maintenu par deux flasques 14 et 15 par collage, ces flasques étant percés de trous centraux respectivement 17 et 18 correspondant aux ouvertures de l'élément 10.

4 **0177396**

Un tel filtre, comme celui de la figure 1,permet d'améliorer les performances,tant du point de vue de la durée d'utilisation,qu'au point de vue de la qualité de la filtration.

Bien entendu, l'invention n'est pas limitée aux modes de réalisation qui viennent d'être décrits et représentés. On pourra y apporter de nombreuses modifications de détail sans sortir pour cela du cadre de l'invention.

R E V E N D I C A T I O N S  **0177396**

1°- Perfectionnements aux filtres du type se présentant sous forme de cartouches et comprenant un élément tubulaire central perforé (1) solidaire de deux flasques (2 et 3) et entouré d'un corps filtrant en papier poreux, caractérisés en ce que le corps filtrant en papier poreux comprend un premier papier filtre (6) plié en accordéon et disposé de manière que les arêtes des plis s'étendent parallèlement à l'élément tubulaire central et un second papier filtre (7) plié en accordéon et chevronné.

2°- Perfectionnements aux filtres selon la revendication 1, caractérisés en ce que le premier papier filtre plié en accordéon (6) est disposé pour épouser l'élément tubulaire central (1) et le second papier filtre (7) plié en accordéon et chevronné est disposé autour du premier papier filtre (6) et prend appui sur les arêtes des plis dudit premier papier filtre (6).

3°- Perfectionnements aux filtres selon la revendication 1, caractérisés en ce que le premier et le second papier filtre (11,13) sont séparés par un élément tubulaire perforé (12).

4°- Perfectionnements aux filtres selon la revendication 1, caractérisés en ce que le second papier filtre (11) plié en accordéon et chevronné est disposé pour épouser l'élément tubulaire central (10), le premier papier filtre étant disposé autour dudit second papier filtre (11).

0177396

FIG.1

FIG.2

Office européen des brevets

**RAPPORT DE RECHERCHE EUROPEENNE**

**0177396**
Numéro de la demande

EP 85 40 1810

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | FR-A-1 229 941 (L.V. GEWISS) * Page 2, colonne de gauche, lignes 17-58 et colonne de droite; pages 3-4 * | 1,2 | B 01 D 29/06 |
| A | US-A-3 397 793 (R.W. McDONNELL) * Colonnes 3-5; colonne 6, lignes 1-55 * | 1,2 | |
| A | GB-A-1 408 804 (PRECISION MECANIQUE LABINAL) | | |

**DOMAINES TECHNIQUES RECHERCHES (Int Cl.4)**

B 01 D

Le présent rapport de recherche a été établi pour toutes les revendications

| Lieu de la recherche | Date d'achèvement de la recherche | Examinateur |
|---|---|---|
| LA HAYE | 29-11-1985 | DE PAEPE P.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82